# EUROPÄISCHE PATENTSCHRIFT

(11) **EP 0 424 799 B1**
(45) Veröffentlichungstag und Bekanntmachung des Hinweises auf die Patenterteilung: **13.07.1994**
(21) Anmeldenummer: 90119978.6
(22) Anmeldetag: 18.10.1990
(51) Int. Cl.: G01N 31/00

(54) **Verfahren zur Bestimmung des Carbonatgehalts von Waschsuspensionen**
Method for determining the carbonate content of wash suspensions
Procédé pour la détermination du contenu en carbonates de solutions de lavage

(30) Priorität: 27.10.1989 DE 3935720
(43) Veröffentlichungstag der Anmeldung: 02.05.1991
(73) Patentinhaber: Noell-KRC Umwelttechnik GmbH, 97064 Würzburg (DE)
(72) Erfinder: Kürzinger, Karl, Dr. Ing., W-8702 Helmstadt (DE)
(74) Vertreter: Werner, Hans-Karsten, Dr.Dipl.-Chem.

(56) Entgegenhaltungen:
- WO-A-89/12699
- GB-A- 2 135 455
- US-A- 3 672 841
- US-A- 4 397 957

## Beschreibung

Gegenstand der vorliegenden Erfindung ist ein Verfahren zur Bestimmung des Carbonatgehalts von Waschsuspensionen von mit Kalkstein betriebenen Rauchgasentschwefelungsanlagen. Diese Suspensionen enthalten im allgemeinen Gips, Sulfit, Chlorid und Carbonat als Hauptbestandteile. Säuert man eine solche Suspension stark an, so wird neben CO₂ auch SO₂ aus dem Sulfit freigesetzt. Die freigesetzte Gasmenge entspricht somit der Summe des Carbonatgehalts und des Sulfitgehalts. Um die Freisetzung von SO₂ zu unterbinden, ist es prinzipiell möglich, das SO₂ vorher zu Sulfat zu oxidieren. Dabei können jedoch nur Oxidationsmittel verwendet werden, die ihrerseits keine Gase freisetzen oder mit den übrigen Komponenten der Suspension keine Gase bilden. So sind beispielsweise starke Oxidationsmittel wie Permanganat in der Lage, Chlorid zu Chlor zu oxidieren und damit eine weitere störende gasförmige Komponente zu bilden.

Die Bestimmung des Carbonates in derartigen Suspensionen ist unter anderem von Interesse, da einerseits eine ausreichende Menge Carbonat vorhanden sein muß, um das SO₂ aus den Rauchgasen zu binden und damit den pH-Wert der Waschsuspensionen zu stabilisieren. Andererseits führen zu hohe Konzentration an Carbonat zu einem unerwünschten Carbonatgehalt des entstehenden Rauchgasgipses. Ein zu hoher Carbonatgehalt im Rauchgasgips wiederum beeinträchtigt oder verhindert die Weiterverarbeitbarkeit von Rauchgasgips.

Die Erfindung hat sich somit die Aufgabe gestellt, in einfacher und zuverlässiger Weise ohne große zeitliche Verzögerung den Carbonatgehalt in Waschsuspensionen von mit Kalkstein betriebenen Rauchgasentschwefelungsanlagen zu bestimmen. Dabei muß das Sulfit und evtl. gelöstes SO₂ entfernt werden, vorzugsweise durch Oxidation zum Sulfat. Das Oxidationsmittel darf aber nicht so stark sein, daß es auch das stets in diesen Waschmittelsuspensionen vorhandene Chlorid zu Chlor oxidiert und dabei zu Störungen der Meßergebnisse führt.

Die Aufgabe kann dadurch überraschend einfach gelöst werden, daß die 40 bis 70°C warmen Proben zunächst mit einer bezogen auf den maximal möglichen Sulfitgehalt überschüssigen Menge Eisen-III-chloridlösung versetzt werden, und nach der Oxidation des Sulfits zum Sulfat durch Zugabe von überschüssiger Schwefelsäure oder anderen Säuren die dem Carbonatgehalt entsprechende entweichende Gasmenge gemessen wird.

Die Messung der entweichenden Gasmenge kann beispielsweise dadurch erfolgen, daß das Volumen an verdrängter Flüssigkeit wie verdünnter Säure gemessen wird. Das Ansäuern des Wassers ist nötig, da anderenfalls das gebildete CO₂ in neutralem Wasser in zu hohem Maße gelöst wird und damit zur Verfälschung des Meßergebisses führt. Als verdünnte Säuren kommen insbesondere verdünnte Salzsäure oder verdünnte Schwefelsäure in Frage. Außer angesäuertem Wasser kommen auch anorganische und/oder organische Flüssigkeiten in Frage, die praktisch kein CO₂ adsorbieren.

Eine weitere Möglichkeit besteht darin, die entweichende Gasmenge durch Messung des Druckanstiegs in einem geschlossenen Gefäß zu messen. Selbstverständlich muß bei beiden Meßmethoden für ausreichend konstanter Temperatur gesorgt werden, da es anderenfalls zur erheblichen Verfälschungen der Meßergebnisse kommt. Insbesondere bei Messung des Druckanstiegs in einem geschlossenen Gefäß ist es notwendig, zuvor mit Proben bekannter Zusammensetzung Meßkurven zu erstellen. Der Vorteil derartiger Messungen besteht jedoch darin, daß sie leichter von angelerntem Personal durchgeführt werden können. Selbst wenn diese Meßmethoden Abweichungen von ± 5 % aufweisen, reicht dies für den o. g. Zweck der Carbonatbestimmung völlig aus. Entscheidend ist nämlich nur, daß der Carbonatgehalt sich innerhalb vorgegebener Grenzen bewegt, um einerseits eine ausreichende Entschwefelung zu gewährleisten und andererseits einen carbonatarmen Rauchgasgips zu liefern. Meßreihen von derartigen Lösungen mit bekanntem Carbonatgehalt mit steigenden Mengen an Sulfit und Chlorid haben gezeigt, daß beim erfindungsgemäßen Verfahren praktisch stets die gleichen und richtigen Ergebnisse gefunden werden. Die Meßergebnisse werden somit weder durch Sulfit noch durch Chlorid beeinflußt oder verfälscht.

Schließlich ist es möglich, die entweichende Gasmenge bzw. deren Konzentration an CO₂ durch physikalische, physikalisch-chemische oder chemische Methoden zu bestimmen. In Frage kommen beispielsweise Infrarot- oder UV-Messungen sowie Miniaturgasdurchflußmesser.

Es ist prinzipiell durchaus möglich, in einem zweiten Schritt in der gleichen Apparatur die entweichende Gasmenge zu messen ohne Eisen-III-chloridlösung zuzugeben. Man erhält dann die Summe von Sulfit und Carbonat. Durch Subtraktion des Wertes für Carbonat alleine, ist es somit auch möglich, in einfacher Weise den Gehalt an Sulfit zu bestimmen. Auch dieser Parameter kann von Interesse sein, um das Funktionieren und die Effizienz der Rauchgasentschwefelung zu überwachen. Der Sulfitgehalt ist insbesondere dann von Interesse, wenn mit wechselnden Lasten gefahren wird und die Rauchgasentschwefelungsanlagen an die geänderten Umstände anzupassen sind.

### Beispiel

Proben mit steigenden Mengen Kalkstein (Calciumcarbonat) von 7,5 bis 45 g/l wurden bei 50°C in einem Reaktionsvolumen von 330 ml mit 100 ml einer FeCl₃ . 6H₂O Lösung versetzt (enthaltend 620 g/l). Kurze Zeit später wurden 20 ml 50 %ige Schwefelsäure zugesetzt, gerührt und das freigesetzte Gasvolumen gemessen. Die Meßwerte ergaben in einem Diagramm eine Meßgerade.

Die Versuche wurden wiederholt, jedoch unter Zusatz von 5 g, 10 g und 15 g Calciumsulfit (CaSO₃ x 0,5 H₂O) sowie bis zu 30 000 ppm Chlorid in Form von Calciumchlorid. Die Meßwerte für freigesetztes Gas lagen praktisch unverändert auf der gleichen Meßgerade.

## Patentansprüche

1. Verfahren zur Bestimmung des Carbonatgehalts von Waschsuspensionen von mit Kalkstein betriebenen Rauchgasentschwefelungsanlagen, dadurch gekennzeichnet, daß die 40 bis 70°C warmen Proben zunächst mit einer bezogen auf den maximal möglichen Sulfitgehalt überschüssigen Menge Eisen-III-chloridlösung versetzt werden, und nach der Oxidation des Sulfits zum Sulfat durch Zugabe von überschüssiger Schwefelsäure oder anderen Säuren die dem Carbonatgehalt entsprechende entweichende Gasmenge gemessen wird.

2. Verfahren gemäß Anspruch 1, dadurch gekennzeichnet, daß die entweichende Gasmenge gemessen wird durch das Volumen an verdrängter Flüssigkeit.

3. Verfahren gemäß Anspruch 1, dadurch gekennzeichnet, daß die entweichende Gasmenge gemessen wird durch den Druckanstieg in einem geschlossenen Gefäß.

4. Verfahren gemäß Anspruch 1, dadurch gekennzeichnet, daß die entweichende Gasmenge bzw. deren Konzentration an CO₂ durch physikalische, physikalisch-chemische oder chemische Methoden bestimmt wird, insbesondere Infrarot- oder UV-Messungen, Miniaturgasdurchflußmesser.

## Claims

1. A method for determining the carbonate content of washing suspensions of flue gas desulfurization plants using limestone, characterized in that the samples being at a temperature of from 40 °C to 70 °C first are admixed with an excess amount, relative to the maximum possible sulfite content, of an iron(III) chloride solution, and after the oxidation of the sulfite to sulfate by means of addition of an excess amount of sulfuric acid or some other acid the amount of escaping gas corresponding to the carbonate content is measured.

2. The process according to claim 1, characterized in that the amount of escaping gas is measured by measuring the volume of the displaced liquid.

3. The process according to claim 1, characterized in that the amount of escaping gas is measured by measuring the increase in pressure in a closed vessel.

4. The process according to claim 1, characterized in that the amount of escaping gas and/or the CO₂ concentration thereof is/are measured by means of physical, physico-chemical or chemical methods, especially by infrared or UV measurements or the use of miniature gas flow meters.

## Revendications

1. Procédé pour la détermination du contenu en carbonate de suspensions de lavage provenant d'installations de désulfuration des gaz de fumée à base de calcaire, caractérisé en ce que les échantillons ayant une température comprise entre 40°C et 70°C sont d'abord mélangés avec une quantité d'une solution de chlorure de fer(III) qui est en excès quant au contenu maximal possible en sulfite et qu'après l'oxidation du sulfite en sulfate grâce à l'addition d'un excès d'acide sulfurique ou d'autres acides on mesure la quantité de gaz échappant qui correspond au contenu en carbonate.

2. Procédé selon la revendication 1, caractérisé en ce que la quantité de gaz échappant est mesurée en tant que volume de liquide déplacé.

3. Procédé selon la revendication 1, caractérisé en ce que la quantité de gaz échappant est mesurée en tant qu'augmentation de pression dans un récipient fermé.

4. Procédé selon la revendication 1, caractérisé en ce que la quantité de gaz échappant ou son concentration de CO₂ sont déterminés par des méthodes physiques, physico-chimiques ou chimiques, particulièrement par des mesures infrarouges ou ultraviolets ou par utilisation de compteurs à gaz en miniature.
